(19) Europäisches Patentamt
European Patent Office
Office européen des brevets

(11) Publication number: 0 012 763
B1

(12) EUROPEAN PATENT SPECIFICATION

(45) Date of publication of patent specification: 13.10.82

(51) Int. Cl.³: C 08 G 63/18

(21) Application number: 79900347.0

(22) Date of filing: 08.03.79

(86) International application number:
PCT/US79/00137

(87) International publication number:
WO 79/00797 18.10.79 Gazette 79/21

# (54) LIQUID CRYSTAL COPOLYESTERS.

(30) Priority: 20.03.78 US 888257

(43) Date of publication of application:
09.07.80 Bulletin 80/14

(45) Publication of the grant of the patent:
13.10.82 Bulletin 82/41

(84) Designated Contracting States:
DE FR GB

(56) References cited:
FR - A - 1 163 702
GB - A - 2 002 792
US - A - 3 160 602
US - A - 3 637 595
US - A - 3 778 410
US - A - 3 948 856
US - A - 3 991 013
US - A - 4 064 108
US - A - 4 066 620
US - A - 4 067 852
US - A - 4 075 262
US - A - 4 083 829
US - A - 4 146 702

The file contains technical information submitted after the application was filed and not included in this specification

(73) Proprietor: EASTMAN KODAK COMPANY
343 State Street
Rochester, New York 14650 (US)

(72) Inventor: JACKSON Jr., Winston, Jerome
4408 Greensprings Circle
Kingsport, TN 37664 (US)
Inventor: MORRIS, John, Craft
P.O. Box 511
Kingsport, TN 37662 (US)

(74) Representative: Parent, Yves
Kodak-Pathé Département des Brevets et Licences 30, rue des Vignerons B.P. 60
F-94302 Vincennes Cedex (FR)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 012 763 B1

# Liquid crystal copolyesters

This invention relates to liquid crystal copolyesters having the high mechanical properties of liquid crystal polyesters and melting points low enough to allow the copolyesters to be melt-processed into useful articles using commercially available equipment.

## Background of the Invention

Liquid crystal polyesters that are all-aromatic have excellent mechanical properties. Examples of these polyesters are the copolyesters prepared from terephthalic acid, isophthalic acid, 2,6-naphthalinedicarboxylic acid and hydroquinone. U.S. Patents 3,160,602 and 3,778,410 describe processes that can be used to prepare these copolyesters. It has been difficult to use these copolyesters because the melting points of the polymers have been so high that the polymers can not be melted and formed into useful articles in conventional processing equipment.

We have found that certain all-aromatic copolyesters prepared from terephthalic acid, isophthalic acid, 2,6-naphthalene dicarboxylic acid and hydroquinone having melting points that are low enough to permit the copolyesters to be processed into useful articles, such as fibers and molded articles, in conventional equipment.

The copolyesters of our invention are prepared from terephthalic acid, isophthalic acid, 2,6-naphthalenedicarboxylic acid, and a diacyl ester of hydroquinone and can be defined as copolyesters having molecular weights suitable for forming fibers and containing the following divalent radicals:

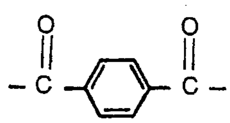

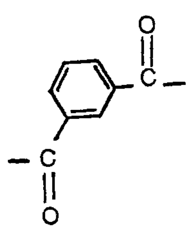

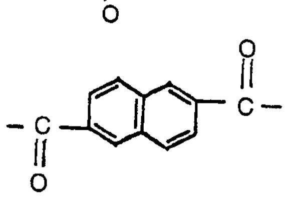

and

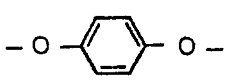

In our copolyesters the range of terephthalic acid is from 20 to 80 mole percent, based on the total moles of terephthalic acid and isophthalic acid combined. Since the range of terephthalic acid is based on the sum of the moles of terephthalic acid and isophthalic acid, at 20 mole percent terephthalic acid our copolyesters have 80 mole percent isophthalic acid and at 80 mole percent terephthalic acid our copolyesters have 20 mole percent isophthalic acid.

In preferred copolyesters the range of terephthalic acid is from 30 to 70 mole percent, based on the total moles of terephthalic acid and isophthalic acid combined.

Also in our copolyesters the amount of 2,6-naphthalenedicarboxylic acid is from 15 to 60 mole percent, based on the total moles of terephthalic acid, isophthalic acid, and 2,6-naphthalenedicarboxylic acid.

In preferred copolyesters the range of 2,6-naphthalenedicarboxylic acid is from 20 to 50 mole percent.

The precise manner in which the melting points of the polyesters of our invention are unexpectedly lower than the melting points of similar polyesters is illustrated in the accompanying Figure.

In the Figure the amount of 2,6-naphthalenedicarboxylic acid, based on the total moles of terephthalic acid, isophthalic acid and 2,6-naphthalenedicarboxylic acid, has been plotted on the abscissa. The temperature in degrees Centigrade has been plotted on the ordinate. Melting points have been plotted for the copolyesters of our invention, containing a quantity of terephthalic acid in the range of 20 to 80 mole percent, based on the total moles of terephthalic acid and isophthalic acid. Suitable curves have been drawn through the data points for copolyesters containing the same amount of terephthalic and isophthalic acid. For example, the lowermost curve drawn through the solid square data points shows the melting points of copolyesters containing 40 mole percent terephthalic acid and 60 mole percent isophthalic acid.

The data for the copolyesters of our invention were obtained by preparing each of the copolyesters using a process known in the art and then determining the melting points of the copolyesters.

The copolyesters of our invention were prepared by an acidolysis procedure whereby terephthalic acid, isophthalic acid, 2,6-naphthalenedicarboxylic acid and a diester of hydroquinone are reacted under an increasing temperature ranging up to 340—380°C. and a decreasing pressure to form a high molecular weight polymer. As a specific example, the following procedure was used to prepare a copolyester from hydroquinone and 40 mole percent terephthalic acid and 60 mole percent isophthalic acid, based on the moles of

terephthalic acid and isophthalic acid combined, and 30 mole percent, 2,6-naphthalenedicarbocylic acid, based on the moles of 2,6-naphthalenedicarboxylic acid, terephthalic acid and isophthalic acid combined.

A mixture of 23.2 g. (0.14 mole) terephthalic acid, 34.9 g. (0.21 mole) isophthalic acid, 32.4 g. (0.15 mole) 2.6-naphthalenedicarboxylic acid, and 111 g. (0.500 mole) hydroquinone dipropionate was placed in a 500 ml. flask equipped with a stirrer, short distillation column and an inlet for nitrogen. The flask was evacuated and purged three times with nitrogen and dried at 100—110°C. for 30 minutes at 0.3 mm pressure before being immersed in a bath at 275°C. After the mixture was stirred for 30 minutes at 280°C., the temperature was raised to 300°C. for 30 minutes and then to 325°C. for 30 minutes. Finally the temperature was raised to 355°C. for 25 minutes and a vacuum of 0.5 mm was applied. The polymerization was complete within 20 to 30 minutes. The tough, fibrous, opaque polymer had a melting point of 334°C.

The other copolyesters containing different amounts of 2,6-naphthalenedicarboxylic acid, terephthalic acid and isophthalic acid were prepared by a similar procedure but using slightly different reaction temperatures because of differences in melting points.

Solid-phase polymerization also may be used to increase the molecular weight of the copolyesters of the invention by heating polymer particles in an inert atmosphere or under reduced pressure at a temperature below that at which the particles will become tacky and tend to fuse together. Since this thermal treatment may give polymers with increased crystallinity and melting points, compared to melt phase polymerization, melt phase polymerization is generally preferred. Solid-phase polymerization is preferred, however, if the melting point is above 380°C.

The melting point of the copolyesters of the invention were determined with a differential scanning calorimeter.

The accompanying Figure shows that the melting points of the polyesters of the invention containing 20 to 80 mole percent terephthalic acid and 15 to 60 percent 2,6-naphthalenedicarboxylic acid are unexpectedly lower than the melting points of polyesters containing less than 20 or more than 80 mole percent terephthalic acid and less than 15 or more than 60 mole percent 2,6-naphthalenedicarboxylic acid. For example, consider the polyester which contains a constant value of 50 mole percent terephthalic acid and is represented by the second curve from the bottom connecting the open square data points. When there is no 2,6-naphthalenedicarboxylic acid present, the melting point is so high the polymer is not useful for melt processing. When even small amounts of 2,6-naphthalenedicarboxylic acid are added the melting point falls rapidly and when 20 mole percent 2,6-naphthalenedicarboxylic acid is added, the melting point falls to 370°C. As the amount of 2,6-naphthalenedicarboxylic acid is further increased, the melting point continues to fall and reaches a minimum value of 350°C. at approximately 35 mole percent 2,6-naphthalenedicarboxylic acid. As the amount of 2,6-naphthalenedicarboxylic acid is increased, the melting point rises.

Although the details of the reduction in melting point have been discussed only for the polyester, containing 50 mole percent terephthalic acid, the same lowering of the melting point applies to the other polyesters within the scope of this invention. For example, the melting point of the polyester containing 40 mole percent terephthalic acid is also substantially lowered when from 15 to 60 mole percent 2,6-naphthalenedicarboxylic acid is used. Melting points for the polyesters containing small amounts of 2,6-naphthalenedicarboxylic acid often cannot be obtained because it is not possible to prepare the polyesters. The polyesters melts so high the polymer becomes solid in the reaction flask prior to forming a high molecular weight polyester.

A wide variety of diesters of hydroquinone can be used to prepare the copolyesters of this invention. Examples of diesters of hydroquinone include the diacetate, dipropionate, dibutyrate and dibenzoate. The diacetate and dipropionate are preferred.

The copolyesters of this invention can contain minor amounts of other naphthalenedicarboxylic acid isomers in addition to the 2,6-isomer. Also, minor amounts of dicarboxylic acids other than terephthalic acid and diols other than hydroquinone can be used. The copolyesters of this invention can also contain nucleating agents, fillers, pigments, glass fibers, asbestos fibers, antioxidants, stabilizers, plasticizers, lubricants, fire-retardants, and other additives.

The inherent viscosity of the copolyesters of this invention cannot be determined because the copolyesters of this invention are insoluble in typical solvents used for determining inherent viscosity. Although the inherent viscosity of the copolyesters of the invention has not been measured, the molecular weights of the copolyesters of the invention are high enough to be in the fiber forming range. The minimum fiber forming molecular weight of the polymer is about 5,000. In most cases copolyesters of the invention have molecular weights above 8,000 and can have molecular weights as high as 20,000 and in some instances the molecular weights can range up to 25,000 or even higher.

## Claims

1. Copolyesters having a fiber forming molecular weight and containing the following divalent radicals.

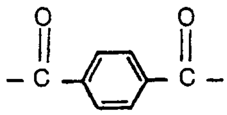

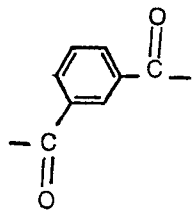

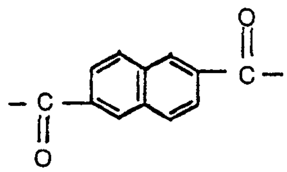

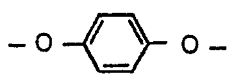

the copolyesters being characterized by the amount of

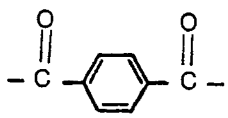

being from 20 to 80 mole percent, based on the total moles of

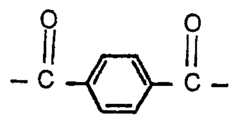

and

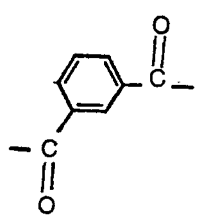

and the amount of

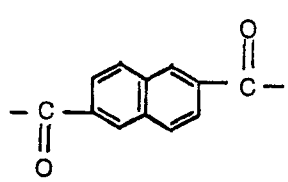

being from 15 to 60 mole percent, based on the total moles of

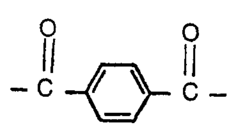

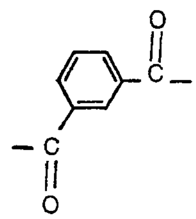

and

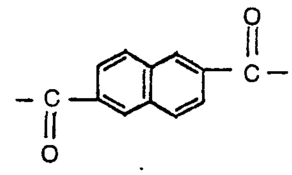

2. The polyester of Claim 1 wherein the amount of

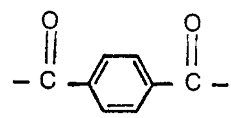

is from 30 to 70 mole percent based on the total moles of terephthalic acid and isophthalic acid, and the amount of

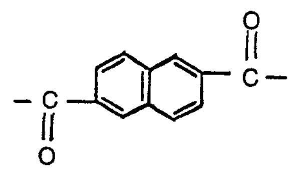

is from 20 to 50 mole percent, based on the total moles of terephthalic acid, isophthalic acid and 2,6-naphthalenedicarboxylic acid.

**Revendications**

1. Copolyesters dont la masse moléculaire est fibrogène et qui contiennent les radicaux divalents suivants:

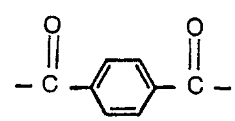

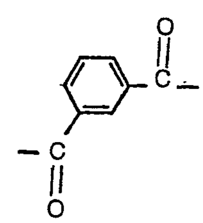

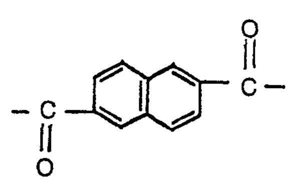

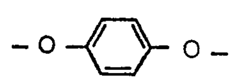

caractérisés en ce que la quantité de radicaux

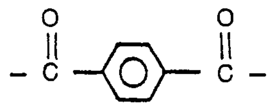

représente entre 20 et 80% en mole de la quantité totale en moles des radicaux

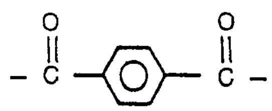

et

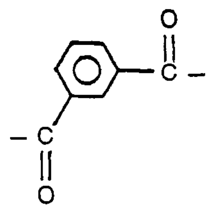

et la quantité de radicaux

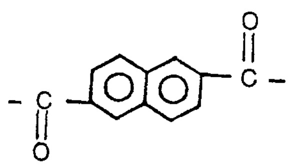

représente entre 15 et 60% en moles de la quantité totale en moles de radicaux

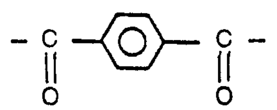 ,

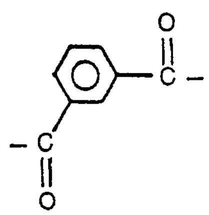

et

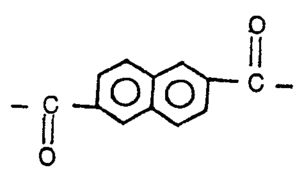

2. Polyester selon la revendication 1 où la quantité de radicaux

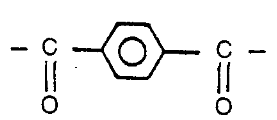 ,

représente entre 30 et 70% en moles de la quantité totale en moles d'acide téréphtalique et d'acide isophtalique, et la quantité de radicaux

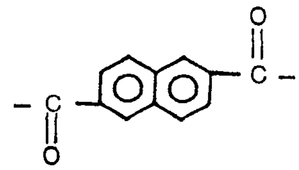

représente entre 20 et 50% en moles de la quantité totale en moles d'acide téréphtalique, d'acide isophtalique et d'acide 2-6 naphtalène-dicarboxylique.

**Patentansprüche**

1. Copolyester mit einem Fasern bildenden Molekulargewicht und den folgenden divalenten Resten:

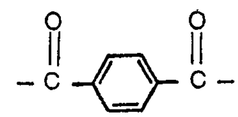

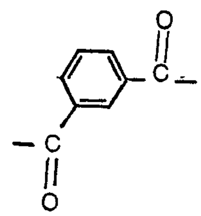

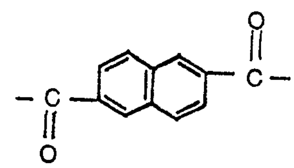

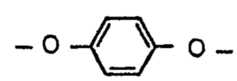

dadurch gekennzeichnet, daß die Menge an Resten der Formel

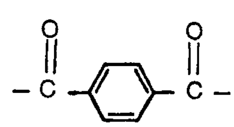

20 bis 80 Mol-%, bezogen auf die Gesamtmole von Resten der Formeln:

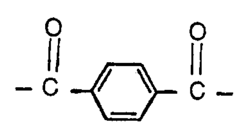

und

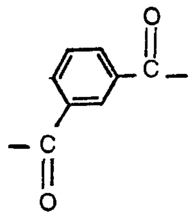

und die Menge an Resten der Formel:

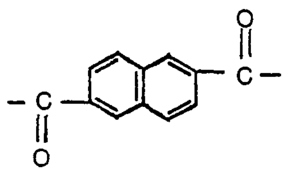

15 bis 60 Mol-%, bezogen auf die Gesamtmole von Resten der Formeln:

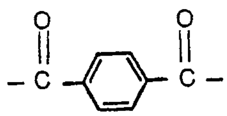

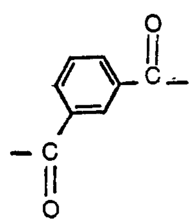

und

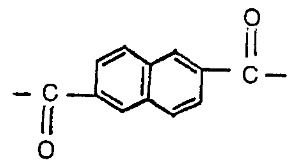

ausmacht.

2. Polyester nach Anspruch 1, dadurch gekennzeichnet, daß die Menge an Resten der Formel

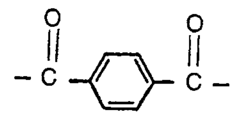

30 bis 70 Mol-%, bezogen auf die Gesamtmole von Terephthalsäure und Isophthalsäure, und die Menge an Resten der Formel

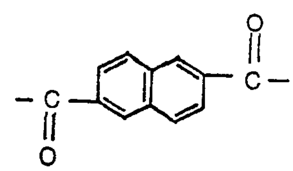

20 bis 50 Mol-%, bezogen auf die Gesamtmole von Terephthalsäure, Isophthalsäure und 2-6 Naphthalindicarbonsäure ausmacht.

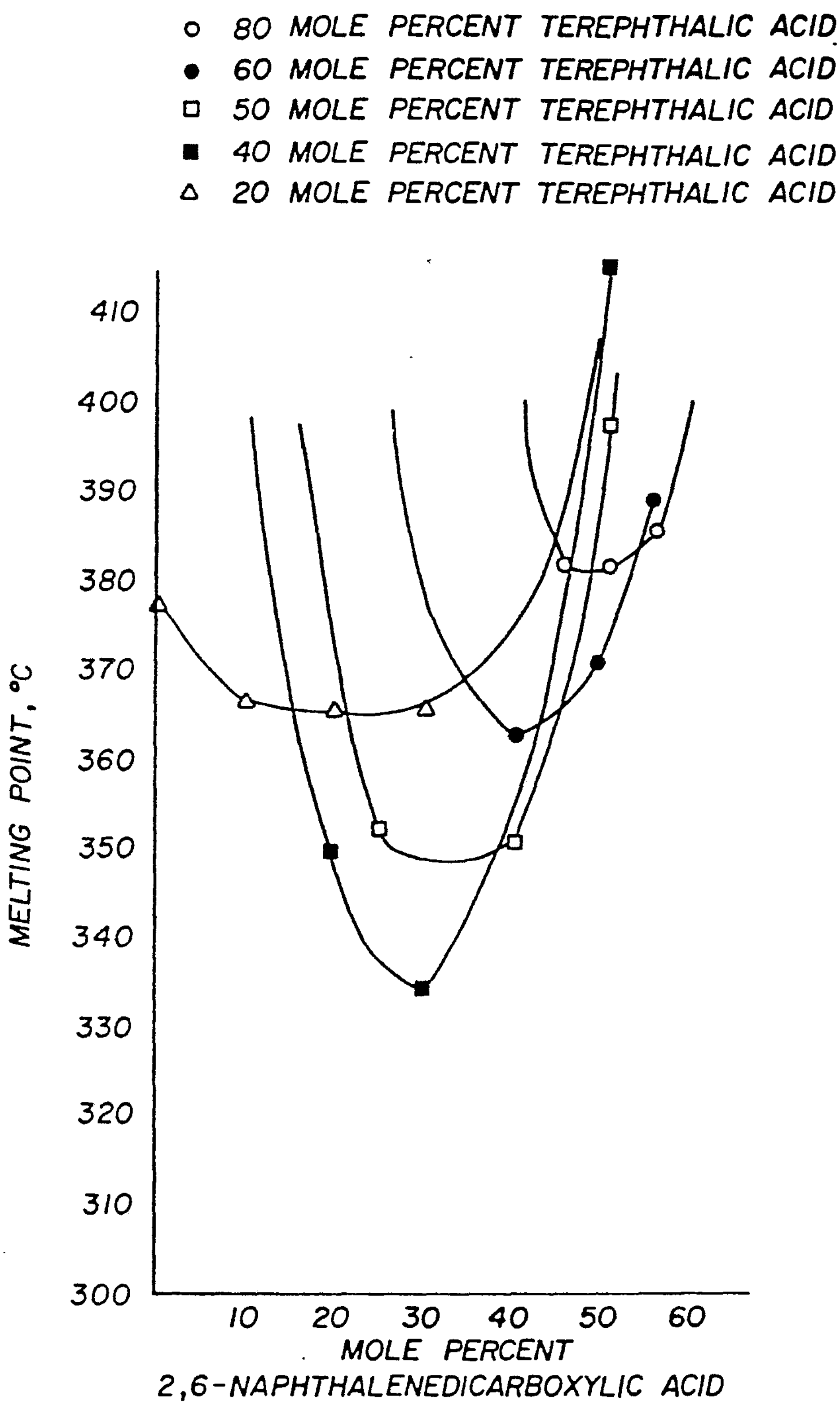

○ 80 MOLE PERCENT TEREPHTHALIC ACID
● 60 MOLE PERCENT TEREPHTHALIC ACID
□ 50 MOLE PERCENT TEREPHTHALIC ACID
■ 40 MOLE PERCENT TEREPHTHALIC ACID
△ 20 MOLE PERCENT TEREPHTHALIC ACID
MELTING POINT, °C
410
400
390
380
370
360
350
340
330
320
310
300
10
20
30
40
50
60
MOLE PERCENT
2,6-NAPHTHALENEDICARBOXYLIC ACID